# EUROPÄISCHE PATENTSCHRIFT

(11) **EP 2 110 014 B1**
(45) Veröffentlichungstag und Bekanntmachung des Hinweises auf die Patenterteilung: **09.02.2011**
(21) Anmeldenummer: 09157513.4
(22) Anmeldetag: 07.04.2009
(51) Int. Cl.: A01D 90/04

(54) **Schneidwerk für halmförmiges landwirtschaftliches Erntegut mit einem Mechanismus zur Auswahl der Schnittlänge**
Cutting tool for spear-shape agricultural crops with a mechanism for selecting the cutting length
Dispositif de coupe pour récoltes agricoles en forme de tiges, doté d'un mécanisme destiné à la sélection de la longueur de coupe

(30) Priorität: 15.04.2008 DE 102008019086
(43) Veröffentlichungstag der Anmeldung: 21.10.2009
(73) Patentinhaber: Deere & Company, Moline, IL 61265-8098 (US)
(72) Erfinder: Lucot, Alain, 70150 Marnay (FR)
(74) Vertreter: Holst, Sönke

(56) Entgegenhaltungen:
- EP-A- 1 584 226
- DE-A1- 3 816 204
- DE-A1- 19 707 662
- DE-U1- 29 719 754

## Beschreibung

Die Erfindung betrifft ein Schneidwerk für halmförmiges landwirtschaftliches Erntegut, umfassend:
eine Anzahl Messer, die quer zu einem von Erntegut durchströmbaren Kanal nebeneinander angeordnet und um eine sich quer zum Kanal erstreckende Schwenkachse schwenkbar angelenkt sind,
den Messern zugeordnete Hebel, die um eine parallel zur Schwenkachse verlaufende Achse drehbar abgestützt und zwischen einer Betriebsposition, in der sie das ihnen zugeordnete Messer in einer aktiven Position halten, in der es sich in den Kanal erstreckt, und einer Außerbetriebsposition beweglich sind, in der sie das Messer nicht in der aktiven Position halten,
den Hebeln zugeordnete Federn, die den zugehörigen Hebel in die Betriebsposition vorspannen, und
eine sich parallel zur Schwenkachse erstreckende, mit den Hebeln zusammenwirkende Schaltwelle zur Auswahl der Schnittlänge, mit der Teilanzahlen in die aktive Position zu verbringender Messer auswählbar sind.

### Stand der Technik

Bei Halmguterntemaschinen, wie Ballenpressen und Ladewagen, besteht in vielen Fällen ein Bedürfnis, das landwirtschaftliche Erntegut vor der Einlagerung in kürzere Stücke zur zerschneiden. Dazu werden Schneidwerke mit einer Anzahl von seitlich nebeneinander angeordneten Messern verwendet, die sich in einen Kanal hineinerstrecken, in dem das Erntegut gefördert wird. Zur Veränderung der Schnittlänge wird jeweils eine Anzahl von Messern in den Kanal hinein oder daraus heraus bewegt.

Die DE 38 16 204 A beschreibt eine Rundballenpresse mit einem Schneidwerk, bei dem die in einer Reihe angeordneten Messer an ihrem stromauf liegenden Ende um eine quer zur Vorwärtsrichtung, in der das Erntegut in die Presskammer gefördert wird, und horizontal verlaufende Achse schwenkbar angelenkt sind. Die Messer umfassen eine Einbuchtung, in die bei in der aktiven Position befindlichen Messern eine erste Rolle eindringt, die an einem ersten Arm eines dem Messer zugeordneten Hebels angelenkt ist, welcher um eine parallel zur Schwenkachse der Messer verlaufende Achse drehbar abgestützt ist. Je eine Feder spannt den ersten Arm des Hebels mit der Rolle in Richtung auf das Messer vor. Der Hebel umfasst einen zweiten Arm mit einer weiteren Rolle. Eine sich parallel zur Achse erstreckende Schaltwelle ist mit mehreren Kurvenscheiben ausgestattet, die mit den weiteren Rollen zusammenwirken und die Hebel in eine Außerbetriebsposition verbringen können, in der die erste Rolle beabstandet von der Einbuchtung am Rücken des Messers anliegt und das Messer aus dem Förderkanal des Ernteguts herausgeschwenkt ist, d. h. sich in der inaktiven Position befindet. Wenn die Kurvenscheibe den Hebel nicht in die Außerbetriebsposition verbringt, zieht die Feder das zugehörige Messer in die Betriebsposition, in der es sich in den Förderkanal erstreckt und das Erntegut schneidet. Beim Auftreten einer Überlast, z. B. durch einen aufgenommenen Fremdkörper, wird die erste Rolle gegen die Kraft der Feder aus der Einbuchtung gedrückt und das Messer gelangt in die inaktive Position.

Die Schaltwelle hat demnach die Aufgabe, die Hebel der jeweils in die inaktive Stellung zu verbringenden Messer entgegen der Kraft der den Hebeln zugeordneten Federn in die Außerbetriebsposition zu verbringen. Aufgrund der hohen Kräfte ist ein Untersetzungsgetriebe erforderlich, um die Schaltwelle manuell verdrehen zu können. Alternativ wird ein für diese Aufgabe ein fremdkraftbetätigter Aktor in Form eines Hydraulikzylinders verwendet. Als nachteilig ist insbesondere anzusehen, dass die auf die Kurvenscheibe wirkenden Kräfte eine recht stabile und deshalb kostspielige Dimensionierung der Kurvenscheiben der Schaltwelle vonnöten werden lassen, um einen vorzeitigen Verschleiß zu vermeiden.

### Aufgabe

Das der Erfindung zugrunde liegende Problem wird darin gesehen, einen gegenüber dem Stand der Technik verbesserten Mechanismus zur Auswahl der Schnittlänge eines Schneidwerks für halmförmiges landwirtschaftliches Erntegut bereitzustellen, der den erwähnten Nachteil vermeidet.

### Lösung

Dieses Problem wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Das Schneidwerk umfasst eine Anzahl an Messern, die in einer sich über die Breite des Kanals erstreckenden, d. h. in einer quer zur Flussrichtung des Ernteguts verlaufenden Richtung seitlich nebeneinander angeordnet sind. Die Messer sind um eine sich quer zum Kanal erstreckende Schwenkachse schwenkbar angelenkt, in der Regel an einem Rahmen einer mit dem Schneidwerk ausgestatteten Erntemaschine. Jedem der Messer ist ein Hebel zugeordnet, der um eine sich parallel zur Schwenkachse erstreckende Achse drehbar gelagert ist. Der Hebel ist zwischen einer Betriebsposition, in der er das ihm zugeordnete Messer in einer aktiven Position hält, in welcher es sich in den Kanal hinein erstreckt, um das Erntegut zu schneiden, und einer Außerbetriebsposition bewegbar. In letzterer hält er das Messer nicht in der aktiven Position, so dass es durch Wirkung der Schwerkraft und/oder durch das anströmende Erntegut in eine inaktive Position gelangt, in der es sich nicht in den Kanal hinein erstreckt. Die Hebel werden durch ihnen zugeordnete Federn in die Betriebsposition vorgespannt. Es ist ein fremdkraftbetätigter Aktor vorhanden, mit dem sämtliche Hebel gegen die Kraft aller Federn in die Außerbetriebsposition verbracht werden können, wenn der Aktor in seine erste Stellung verbracht wird. Eine vom Aktor getrennte Schaltwelle dient zur Auswahl unterschiedlicher Teilanzahlen der Messer, die in eine aktive Position verbracht werden sollen, und somit zur Auswahl der Schnittlänge des Ernteguts. Selbstverständlich ist es auch möglich, alle Messer oder kein Messer in die aktive Position zu verbringen. Die Schaltwelle ist unabhängig vom Aktor und dient lediglich dazu, die Hebel der nicht in die aktive Position zu verbringenden Messer in der Außerbetriebsposition zu halten. Sobald der Aktor in seine zweite Stellung verbracht wird, in der er eine freie Bewegung der Hebel in ihre Betriebsposition durch die Kraft der Federn erlaubt, gelangen nur die ausgewählten, in die aktive Position zu verbringenden Messer durch ihre nicht durch die Schaltwelle gehaltenen, durch die Federn in die Betriebsposition verbrachten Hebel in die aktive Position. Die anderen Hebel bleiben hingegen in der Außerbetriebposition, in der sie durch die Schaltwelle gehalten werden.

Es wird demnach vorgeschlagen, die Funktionen der Bewegung der Hebel zwischen Betriebsposition und Außerbetriebsposition einerseits und der Auswahl der Messer andererseits zu trennen. Die erste Aufgabe wird durch den Aktor übernommen, während die Schaltwelle für die zweite Aufgabe dient. Auf diese Weise kann die Schaltwelle relativ einfach und kostengünstig ausgeführt werden, und sie ist weniger verschleißanfällig als im Stand der Technik.

Bei einer bevorzugten Ausführungsform der Erfindung ist die Schaltwelle zur Auswahl der Schnittlänge um ihre Längsachse drehbar. Es wäre aber auch denkbar, sie alternativ oder zusätzlich zur Auswahl der Schnittlänge in ihrer Längsrichtung verschiebbar zu gestalten.

Die Schaltwelle ist zweckmäßigerweise nur dann bewegbar, wenn die Hebel sich in der Außerbetriebsstellung befinden. Dadurch verhindert man Schäden, die auftreten können, wenn die Schaltwelle bewegt wurde, bevor der Aktor in die erste Stellung verbracht wird. Es bietet sich daher an, eine Kopplung zwischen dem Aktor und der Schaltwelle vorzusehen, die eine Bewegung der Schaltwelle nur bei in die Außerbetriebsstellung verbrachten Hebeln ermöglicht. Bei einer fremdkraftbetätigten Schaltwelle kann eine elektronische Steuerung mit dem Aktor gekoppelt werden und nur dann eine Bewegung der Schaltwelle ermöglichen, wenn sich der Aktor in der ersten Stellung befindet. Wird die Schaltwelle manuell betätigt, kann diese Kupplung mechanisch erfolgen, insbesondere indem die Kopplung mit dem Aktor gekoppelt ist und einen ersten Teil und einen zweiten Teil umfasst. Der erste Teil umschließt die Schaltwelle, solange der Aktor sich in der ersten Stellung befindet, schränkt ihre Bewegung aber nicht ein. Der zweite Teil umschließt die Schaltwelle, wenn sich der Aktor in der zweiten Stellung befindet, und unterbindet dann ihre Bewegung.

Die Hebel umfassen vorzugsweise zwei Arme, die auf gegenüber liegenden Seiten der Achse angeordnet sind, um welche die Hebel schwenkbar angelenkt sind. Der erste Arm wirkt mit dem Messer zusammen, während der zweite Arm mit dem Aktor zusammenwirkt. Die Schaltwelle kann mit dem ersten Arm oder mit dem zweiten Arm zusammenwirken, wobei letzteres aus räumlichen Gründen bevorzugt ist.

Die Schaltwelle umfasst vorzugsweise abgeflachte Bereiche, die mit komplementär geformten Aussparungen in den Hebeln zusammenwirken. Die Aussparungen umfassen demnach eine Öffnung, in der sich die Schaltwelle befindet, wenn der Hebel in der Außerbetriebsstellung ist, und einen von der Öffnung nach außen führenden Durchbruch, der schmaler als die Öffnung ist und durch den die Schaltwelle nur dann hindurchpasst, wenn sie sich in einer Stellung befindet, die einer aktiven Position des zugehörigen Messers zugeordnet ist.

Das erfindungsgemäße Schneidwerk kann an beliebigen Erntemaschinen für die Halmguternte verwendet werden. Beispiele sind Ladewagen und Ballenpressen für runde oder rechteckige Ballen.

### Ausführungsbeispiel

In den Zeichnungen ist ein nachfolgend näher beschriebenes Ausführungsbeispiel der Erfindung dargestellt. Es zeigt:
- Fig.: 1 eine schematische seitliche Ansicht einer Rundballenpresse mit einem Schneidwerk,
- Fig. 2: eine perspektivische Ansicht des Schneidwerks,
- Fig. 3: eine schematische seitliche Ansicht eines in der aktiven Position befindlichen Messers des Schneidwerks mit dem zugehörigen Hebel, der Schaltwelle und einem in der ersten Stellung befindlichen Aktor, die eine Drehung der Schaltwelle ermöglicht,
- Fig. 4: eine Ansicht nach Figur 3 bei in der zweiten Stellung befindlichem Aktor, wobei das Messer sich in der aktiven Position befindet,
- Fig. 5: eine Ansicht nach Figur 3 bei in die Sperrposition verbrachter Schaltwelle, wobei das Messer sich in der inaktiven Position befindet, und
- Fig. 6: eine seitliche Ansicht der Kopplung zwischen dem Aktor und der Schaltwelle, die eine unbeabsichtigte Bewegung der Schaltwelle unterbindet.

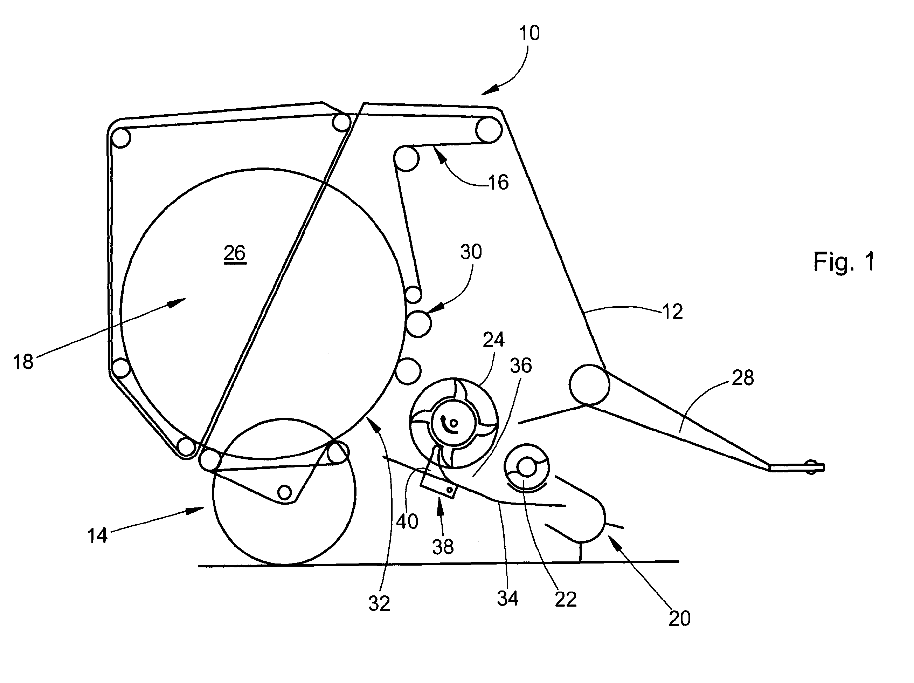

Eine in der Figur 1 gezeigte Ballenpresse 10 weist einen Aufbau 12, ein Fahrgestell 14, Presselemente 16, einen Pressraum 18, einen Aufnehmer 20, einen Querförderer 22 und einen Förderrotor 24 auf. Die Ballenpresse 10 steht hier stellvertretend für jede Bauart einer Ballenpresse, d.h. als Rundballenpresse mit festem oder variablem Pressraumvolumen, mit Riemen, Rollen oder Ketten, als Quaderballenpresse, in der Landwirtschaft, in der Industrie oder im Gewerbe, etc. Im herkömmlichen Fall wird eine solche Ballenpresse 10 über ein Feld gezogen, um halmförmiges Erntegut, z.B. Stroh, Heu oder Silage vom Boden aufzunehmen und es dem Pressraum 18 oder einem Laderaum eines Ladewagens zuzuführen, um darin z.B. einen Ballen 26 zu bilden oder das Erntegut zu speichern und an geeigneter Stelle abzuladen. Der Aufbau 12 enthält Wände und Streben, die auf dem Fahrgestell 14 ruhen und mittels einer Deichsel 28 an ein Fahrzeug, z.B. einen Ackerschlepper anschließbar sind. Das Fahrgestell 14 besteht aus einer Achse und Rädern in herkömmlicher Weise.

Die Presselemente 16 werden bei dem dargestellten Ausführungsbeispiel von Riemen gebildet, die über Rollen 30 geführt oder mit diesen kombiniert sind. Diese Presselemente 16 belassen einen Abstand, um einen Einlass 32 für das Erntegut in den Pressraum 18 zu bilden. Die Presselemente 16 können in beiden Richtungen umlaufen. Der Pressraum 18 ist in diesem Ausführungsbeispiel in konstanter Größe ausgebildet, kann aber beliebig ausgeführt werden.

Der Aufnehmer 20, eine sogenannte Pick-up, nimmt Erntegut vom Boden auf, das in einem Schwad von sich ändernder Stärke und Größe abgelegt ist und auf dem Weg zu dem Pressraum 18 auf eine schmalere Breite zusammengeführt wird. Der Aufnehmer 20 arbeitet oberschlächtig. Das von ihm aufgenommene Erntegut wird mittels des an seiner Abgabeseite angeordneten Querförderers 22 zusammengeführt, bei dem es sich um eine Querförderschnecke handelt, die sich aus einem zentralen Rohr und um das Rohr gewickelten Wendeln zusammensetzt. Der Querförderer 22 übergibt das Erntegut dann an den unterschlächtig arbeitenden Förderrotor 24, der ein zentrales Rohr und daran befestigte Mitnehmer aufweist und es in den Einlass 32 fördert. Unterhalb des Querförderers 22 und des Förderrotors 24 befindet sich eine starre Wand 34, an deren Oberseite das Erntegut entlang gefördert wird. Zwischen der Wand 34 und dem Förderrotor 24 befindet sich demnach ein Kanal 36, durch den das Erntegut gefördert wird.

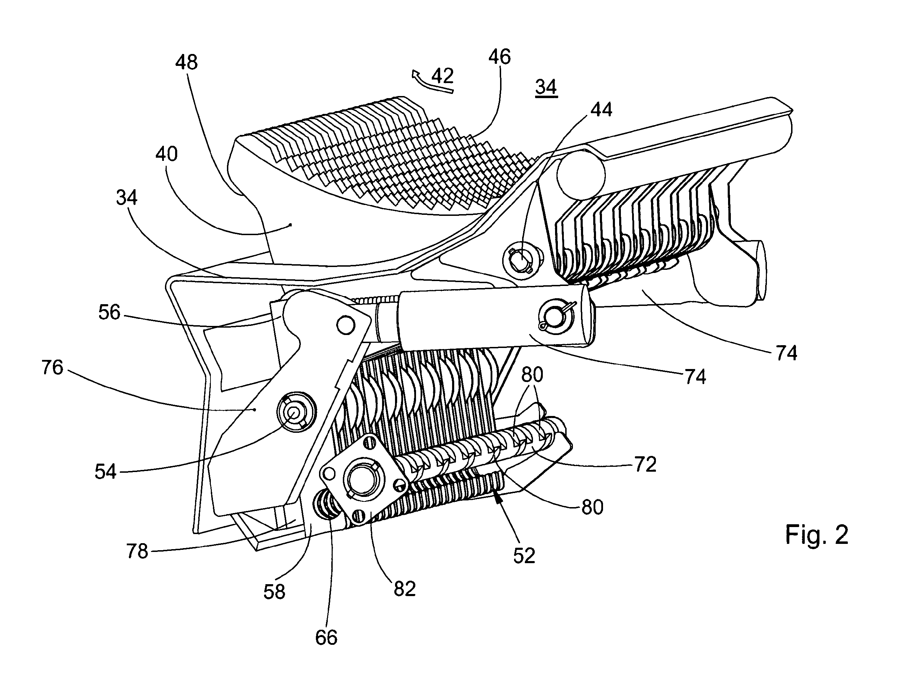

In den Kanal 36 können wahlweise Messer 40 eines Schneidwerks 38 eingefügt werden, um das Erntegut in kürzere Stücke zu zerteilen. Das Schneidwerk 38 umfasst mehrere seitlich (quer zur Flussrichtung des Emteguts) nebeneinander angeordnete Messer 40, von denen eine Teilanzahl oder alle oder keine in den Kanal 36 eingebracht werden können. Der zugehörige Mechanismus ist in den Figuren 2 bis 6 dargestellt.

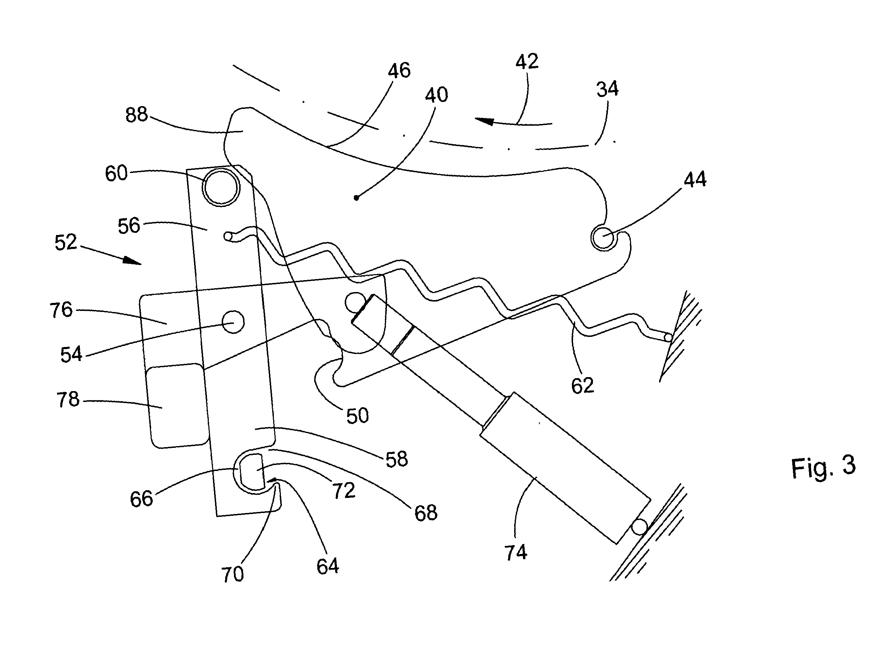

In der Figur 2 ist das Schneidwerk in einer Situation dargestellt, in der alle Messer 40 sich in der aktiven Position befinden, in der sie sich in den Kanal hinein erstrecken. Die Messer 40 sind an ihrem bezüglich der durch den Pfeil 42 gekennzeichneten Flussrichtung des Ernteguts stromauf liegenden Ende um eine Schwenkachse 44 schwenkbar am Rahmen oder Aufbau der Ballenpresse 10 abgestützt. Die Schwenkachse 44 erstreckt sich horizontal und quer zur Vorwärtsrichtung der Ballenpresse 10 und somit quer zum Kanal 36. Das in seiner Gesamtheit etwa dreieckförmige Messer 40 umfasst an seiner Oberseite eine geschärfte, gezahnte Schneidkante 46, die sich in den Kanal 36 hinein erstreckt, um das Erntegut zu schneiden. Am unteren Ende seiner rückwärtigen Kante 48 umfasst das Messer 40 eine Einbuchtung 50 (s. Figuren 3 bis 5).

Eine der Anzahl der Messer 40 entsprechende Anzahl an Hebeln 52 sind einzeln um eine sich parallel zur Schwenkachse 44 verlaufende Achse 54 drehbar am Rahmen oder Aufbau 12 der Ballenpresse 10 abgestützt und umfassen jeweils einen ersten, oberen Arm 56 und einen zweiten, unteren Arm 58, zwischen denen sich die Achse 54 befindet. Die Hebel 52 bestehen aus U-förmigen Profilen. An der Außenseite des ersten Arms 56 ist eine Rolle 60 um eine parallel zur Achse 54 verlaufende Achse drehbar befestigt, wie in den Figuren 3 bis 5 erkennbar ist. Jedem Hebel 52 ist auch eine Feder 62 zugeordnet (s. Figuren 3 bis 5), die einen Endes am ersten Arm 56 des Hebels 52 und anderen Endes am Rahmen oder Aufbau 12 der Ballenpresse 10 angelenkt ist und den ersten Arm 56 mit der Rolle 60 in Richtung auf die rückwärtige Kante 48 des Messers 40 vorspannt, so dass die Rolle 60 in der Einbuchtung 50 gehalten wird. Der zweite Arm 58 ist mit einer Aussparung 64 ausgestattet, die sich aus einer kreisförmigen Öffnung 66 und einem Durchbruch 68 zusammensetzt, der sich von der Öffnung 66 bis zum Rand des Arms 58 erstreckt und dessen Querschnitt durch eine Nase 70 eingeschränkt wird, so dass der Durchbruch 68 in Querrichtung enger als die Öffnung 66 ist. Eine Schaltwelle 72 befindet sich außerhalb der Öffnung 66.

Weiterhin sind zwei fremdkraftbetätigte Aktoren 74 vorhanden, die in den Figuren 3 bis 5 nur schematisch dargestellt und zwischen dem Rahmen oder Aufbau der Ballenpresse 10 und jeweils einer Schwinge 76 angelenkt sind. Die Schwingen 76 sind ebenfalls um die Achse 54 drehbar gelagert und weiterhin auf der dem Aktor 74 gegenüberliegenden Seite mit einem Balken 78 verbunden, der sich auf der vom Durchbruch 68 beabstandeten Seite des zweiten Arms 58 befindet. Der Balken 78 erstreckt sich über die Breite des Schneidwerks. Jeweils ein Aktor 74 und eine Schwinge 76 sind an jedem seitlichen Ende des Schneidwerks vorgesehen und dort mit dem Balken 78 verbunden. Die Aktoren 74 sind zwischen einer ersten Position, in der sie den Balken 78 gegen die Hebel 52 drücken und die Hebel 52 um die Achse 54 bezüglich der Figuren im Gegenuhrzeigersinn drehen, so dass die Schaltwelle 72 sich innerhalb der Öffnung 66 befindet (s. Figur 3), und einer zweiten Position beweglich (s. Figuren 2 und 4 bis 6), in der die Position der Hebel 52 nicht beeinflusst wird. Der Balken 78 kann dann am zweiten Arm 58 anliegen oder davon beabstandet sein.

Die Schaltwelle 72 ist mit um ihren Umfang und in ihrer Längsrichtung verteilten abgeflachten Bereichen 80 ausgestattet, die mit den Öffnungen 66 zusammenwirken. Die Schaltwelle 72 ist um ihre Längsachse drehbar und in vier auswählbaren Drehstellungen arretierbar, wozu eine Lochscheibe 82 mit der Schaltwelle 72 verbunden ist, die durch einen Splint oder Stift mit dem Rahmen oder Aufbau 12 der Ballenpresse 10 verbindbar ist, um die Schaltwelle in der ausgewählten Stellung zu sichern.

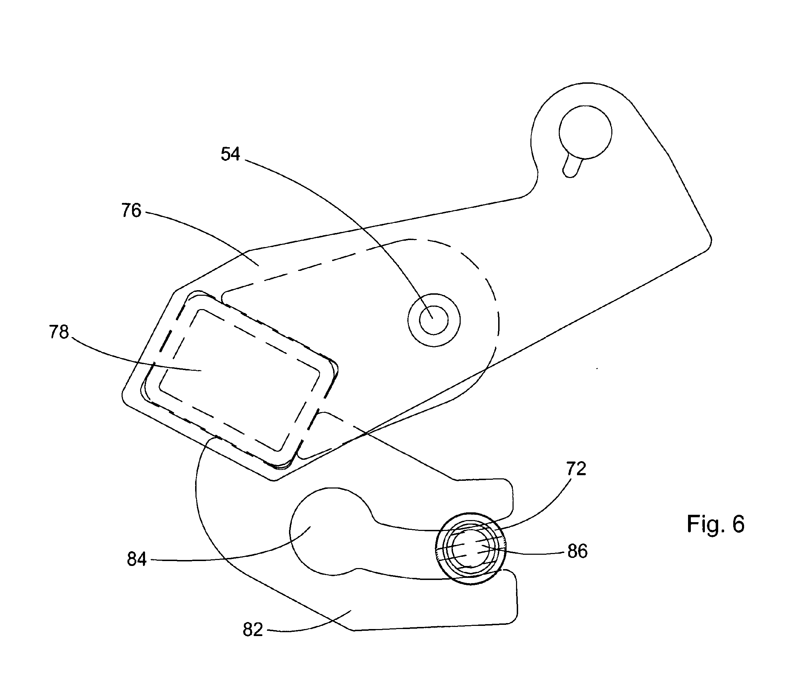

Die Figur 6 zeigt eine mechanische Kopplung 82, die verhindert, dass die Schaltwelle 72 gedreht wird, wenn sich die Aktoren 74 in der zweiten Stellung befinden. Die Kopplung 82 ist ein starr mit dem Balken 78 und/oder der Schwinge 76 verbundenes Blech mit einem ersten Teil 84 in Form eines kreisförmigen Lochs und einem zweiten Teil 86 in Form eines Langlochs, das sich zur Vereinfachung des Zusammenbaus nach rechts hin öffnet. Die Schaltwelle 72 ist in ihrem mit der Kopplung 82 zusammenwirkenden Bereich mit einem abgeflachten, hier quadratischen Querschnitt versehen. Dadurch erreicht man, dass die Schaltwelle 72 nicht gedreht werden kann, wenn die Aktoren 74 in der zweiten Stellung sind, da der quadratische Querschnitt der Schaltwelle 72 dann an den zweiten Teil 86 stößt. Werden die Aktoren 74 hingegen in ihre erste Stellung verbracht, befindet sich die Schaltwelle 72 innerhalb des kreisförmigen, ersten Teils 84 und kann problemlos gedreht und mittels des oben erwähnten Stifts oder Splints in der ausgewählten Stellung arretiert werden.

Nach alledem ergibt sich die folgende Funktionsweise des Mechanismus zur Auswahl der Schnittlänge des Schneidwerks.

Um die Anzahl der in den Kanal 36 einzufügenden Messer 40 auszuwählen, veranlasst der Bediener, dass die Aktoren 74 mit unter Druck stehenden Hydraulikmedium beaufschlagt werden. Dazu ist eine Verbindung mit der Bordhydraulik des die Ballenpresse 10 ziehenden Traktors oder eine eigene Hydraulik der Ballenpresse 10 vorgesehen, die mittels eines Ventils mit der Kolbenkammer des als einfach wirkender Hydraulikzylinder ausführbaren Aktors 74 verbunden wird. Das Ventil kann auch ferngesteuert vom Bedienerarbeitsplatz des Traktors aus angesteuert werden. Man erreicht dadurch, dass der Balken 78 alle Hebel 52 in die in der Figur 3 dargestellte Außerbetriebsposition verbringt. Da dann die Rollen 60 nicht mehr in den zugehörigen Einbuchtungen 50 sind, fallen die Messer 40 aufgrund der Schwerkraft und/oder des anströmenden Ernteguts um die Schwenkachse 44 nach unten in die inaktive Position, in der sie sich nicht mehr im Kanal 36 befinden und keine Schneidwirkung auf das Erntegut ausüben. Eine obere Nase 88 an der Oberseite der rückwärtigen Kante 48 des Messers 40 liegt dann an der Rolle 60 an und verhindert ein weiteres Absinken des Messers 40.

Da sich die Schaltwelle 72 nunmehr innerhalb des ersten Teils 84 der Kopplung 82 befindet, kann die Schaltwelle 72 in eine von den vier möglichen Positionen gedreht werden, was manuell oder mittels eines weiteren fremdkraftbetätigten Aktors (nicht gezeigt) vom Bedienerarbeitsplatz auf dem Traktor aus erfolgen kann. Bei einer möglichen Ausführungsform sind den vier Stellung der Schaltwelle folgende Messeranzahlen zugeordnet: 7, 12, 13 und 25, wobei 25 die Gesamtzahl der Messer 40 ist. Soll überhaupt kein Messer 40 aktiviert werden, bleiben die Aktoren 74 in der zweiten Stellung, wie sie in der Figur 3 dargestellt ist. Die Auswahl von 12 bzw. 13 Messern 40 ermöglicht es, jeweils andere Messer 40 alternativ zu verwenden, so dass durch alternierende Verwendung ihre Abnutzung gleichmäßig erfolgen kann. Es kann somit zwischen drei Schnittlängen gewählt werden.

Nachdem die Schaltwelle 72 in die gewünschte Stellung verbracht wurde, werden die Aktoren 74 wieder in die zweite Stellung gebracht, indem durch ein geeignetes Ventil das Hydraulikfluid aus ihren Kolbenkammern in einen Tank abgeleitet wird. Es wäre auch denkbar, die Aktoren 74 als doppelt wirkende Hydraulikzylinder zu gestalten und ihre Kolbenstangenkammern mit unter Druck stehenden Hydraulikfluid zu beaufschlagen, wenn die Rückstellkraft der Federn 62 nicht ausreichen sollte. Die Federn 62 der Hebel 52 der für die aktive Position ausgewählten Messer 40 (und ggf. die doppeltwirkenden Aktoren 74) verbringen dann die Aktoren 74 und den Balken 78 in die zweite Stellung, wie sie in den Figuren 2 und 4 bis 6 dargestellt ist.

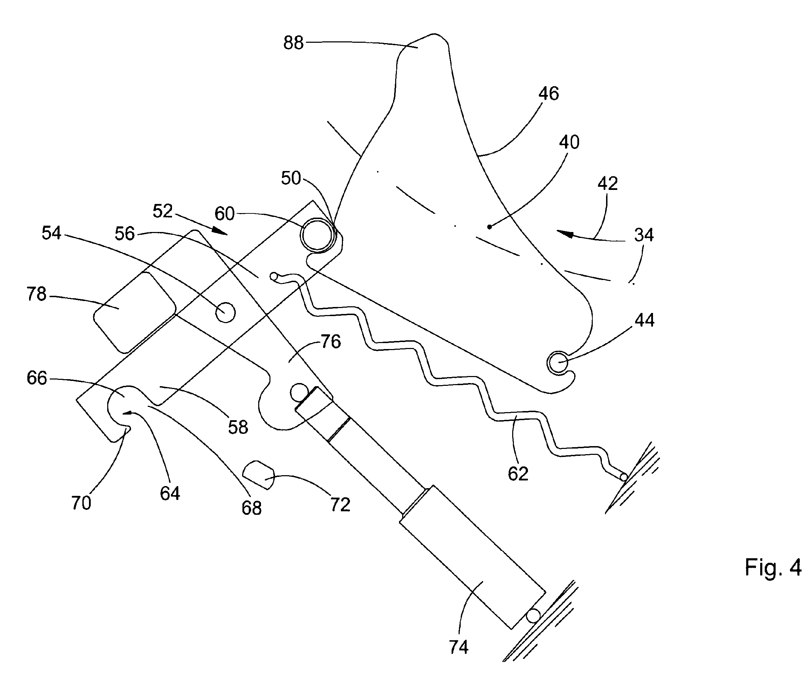

Die abgeflachten Bereiche 80 der Schaltwelle 72 und die Aussparungen 64 in den Hebeln 52 mit den kreisförmigen Öffnungen 66 den Durchbrüchen 68 und den Nasen 70 sind derart dimensioniert, dass die Hebel 52 der für die aktive Position ausgewählten Messer 40 nicht durch die Schaltwelle 72 festgehalten werden, so dass die Hebel 52 frei durch die Kraft der zugehörigen Feder 62 um die Achse 54 im Uhrzeigersinn in ihre Betriebsposition verschwenken können. Die Rolle 60 gleitet dabei an der rückwärtigen Kante 48 des Messers 40 entlang und schwenkt es um die Schwenkachse 44 in die aktive Position, in der es sich in den Kanal 36 hinein erstreckt, wie in der Figur 4 dargestellt. Im Fall des Einlaufens eines Fremdkörpers, z. B. Steins, drückt das Messer 40 die Rolle 60 gegen die Kraft der Feder 62 aus der Einbuchtung 50 hinaus, so dass das Messer 40 dann selbsttätig in die inaktive Stellung gelangt und Schäden am Messer 40 verhindert werden.

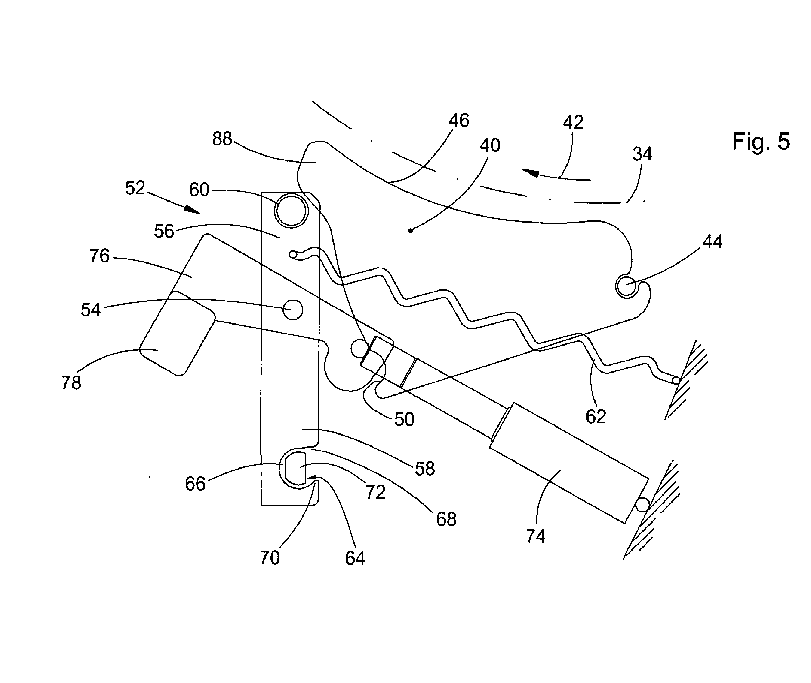

Die abgeflachten Bereiche 80 der Schaltwelle 72 und die Aussparungen 64 in den Hebeln 52 mit den kreisförmigen Öffnungen 66 den Durchbrüchen 68 und den Nasen 70 sind weiterhin derart dimensioniert, dass die Hebel 52 der nicht für die aktive Position ausgewählten Messer 40 durch die Schaltwelle 72 festgehalten werden, so dass die Hebel 52 nicht durch die Kraft der zugehörigen Feder 62 um die Achse 54 im Uhrzeigersinn verschwenken können. Die Hebel 52 der nicht für die aktive Position ausgewählten Messer 40 verbleiben daher in der Außerbetriebsposition, wie in der Figur 5 dargestellt, da sie durch die Schaltwelle 72 dort festgehalten werden.

Abschließend sei angemerkt, dass die Aktoren 74 auch durch eine vom Bediener manuell betätigte Anordnung ersetzt werden können, so dass die Fremdkraft durch den Bediener bereitgestellt wird, beispielsweise mittels einer Handkurbel und einer geeigneten Untersetzung.

## Patentansprüche

1. Schneidwerk für halmförmiges landwirtschaftliches Erntegut, umfassend:
eine Anzahl Messer (40), die quer zu einem von Erntegut durchströmbaren Kanal (36) nebeneinander angeordnet und um eine sich quer zum Kanal (36) erstreckende Schwenkachse (44) schwenkbar angelenkt sind,
den Messern (44) zugeordnete Hebel (52), die um eine parallel zur Schwenkachse (44) verlaufende Achse (54) drehbar abgestützt und zwischen einer Betriebsposition, in der sie das ihnen zugeordnete Messer (40) in einer aktiven Position halten, in der es sich in den Kanal (36) erstreckt, und einer Außerbetriebsposition beweglich sind, in der sie das Messer (40) nicht in der aktiven Position halten,
den Hebeln (52) zugeordnete Federn (62), die den zugehörigen Hebel (52) in die Betriebsposition vorspannen, und
eine sich parallel zur Schwenkachse (44) erstreckende, mit den Hebeln (52) zusammenwirkende Schaltwelle (72) zur Auswahl der Schnittlänge, mit der Teilanzahlen in die aktive Position zu verbringender Messer (40) auswählbar sind,
**dadurch gekennzeichnet, dass** ein von der Schaltwelle (72) unabhängiger, fremdkraftbetätigter Aktor (74) zwischen einer ersten Stellung, in der alle Hebel (52) in die Außerbetriebsposition verbracht sind und einer zweiten Stellung beweglich ist, in der die Hebel (52) in die Betriebsposition gelangen können,
und dass die Schaltwelle (72) eingerichtet ist, die Hebel (52) der jeweils nicht ausgewählten Messer (40) in der Außerbetriebsposition festzuhalten, sodass nur die ausgewählten Messer (40) bei in der zweiten Stellung befindlichem Aktor (74) durch die Wirkung der Federn (62) in die aktive Position gelangen.

2. Schneidwerk nach Anspruch 1, **dadurch gekennzeichnet, dass** die Schaltwelle (72) um ihre Längsachse drehbar ist.

3. Schneidwerk nach Anspruch 1 oder 2, **dadurch gekennzeichnet, dass** eine Kopplung (82) zwischen dem Aktor (74) und der Schaltwelle (72) vorhanden ist, die eine Bewegung der Schaltwelle (72) nur dann ermöglicht, wenn sich der Aktor (74) in der ersten Stellung befindet.

4. Schneidwerk nach Anspruch 3, **dadurch gekennzeichnet, dass** die Kopplung (82) mit dem Aktor (74) gekoppelt ist und mit einem ersten Teil (84) und einem zweiten Teil (86) ausgestattet ist, wobei der erste Teil (84) bei einem in der ersten Stellung befindlichen Aktor (74) die Bewegung der Schaltwelle (72) nicht einschränkt und der zweite Teil (86) bei einem in der zweiten Stellung befindlichen Aktor (74) die Bewegung der Schaltwelle (72) unterbindet.

5. Schneidwerk nach Anspruch 4, **dadurch gekennzeichnet, dass** der erste Teil (84) der Kopplung (82) eine Abmessung aufweist, die größer als der Hüllkreisdurchmesser der Schaltwelle (72) ist, während der zweite Teil (86) ein Langloch ist, in dem ein abgeflachter Bereich der Schaltwelle (72) Aufnahme findet.

6. Schneidwerk nach einem der Ansprüche 1 bis 5, **dadurch gekennzeichnet, dass** die Hebel (52) zwei Arme (56, 58) umfassen, wobei ein erster Arm (56) auf einer ersten Seite der Achse (54) und ein zweiter Arm (58) auf der anderen Seite der Achse (54) liegt und der erste Arm (56) mit dem Messer (40) zusammenwirkt, während der zweite Arm (58) mit dem Aktor (74) zusammenwirkt.

7. Schneidwerk nach Anspruch 6, **dadurch gekennzeichnet, dass** die Schaltwelle (72) mit dem zweiten Arm (58) zusammenwirkt.

8. Schneidwerk nach einem der Ansprüche 1 bis 7, **dadurch gekennzeichnet, dass** die Schaltwelle (72) abgeflachte Bereiche (80) umfasst, die mit Aussparungen (64) im Hebel (52) zusammenwirken, und dass die Aussparungen (64) derart geformt sind, dass die Aussparung (64) nur bei einer vorbestimmten Stellung der Schaltwelle (72) von der Schaltwelle (72) hinwegführbar ist.

9. Schneidwerk nach einem der Ansprüche 1 bis 8, **dadurch gekennzeichnet, dass** die Schaltwelle (72) insgesamt vier Schaltstellungen aufweist.

10. Schneidwerk nach Anspruch 9, **dadurch gekennzeichnet, dass** sich in einer ersten Schaltstellung der Schaltwelle (72) alle Messer (40) in der aktiven Position befinden, dass sich in einer zweiten und dritten Schaltstellung alternierend jeweils näherungsweise die Hälfte der Messer (40) in einer aktiven Position befinden, und dass sich in der vierten Schaltstellung der Schaltstellung etwa ein Drittel der Messer (40) in der aktiven Position befinden.

11. Schneidwerk nach einem der Ansprüche 1 bis 10, **dadurch gekennzeichnet, dass** der Aktor (74) mit einem sich quer zum Kanal (36) erstreckenden, mit den Hebeln (52) zusammenwirkenden Balken (78) antriebsverbunden ist.

12. Schneidwerk nach Anspruch 11, **dadurch gekennzeichnet, dass** Aktoren (74) an beiden Enden des Balken (78) angeordnet sind.

13. Schneidwerk nach Anspruch 11 oder 12, **dadurch gekennzeichnet, dass** der Aktor (74) über eine Schwinge (76) mit dem Balken (78) verbunden ist, die um die Achse (54) der Hebel (52) schwenkbar ist.

14. Hebel (52), einsetzbar in einem Schneidwerk nach einem der vorhergehenden Ansprüche, wobei der Hebel (52) einen ersten Arm (56) und einen zweiten Arm (58) umfasst, zwischen denen sich eine Achse (54) befindet, um die der Hebel (52) in dem Schneidwerk schwenkbar anbringbar ist, an der Außenseite des ersten Arms (56) eine Rolle (60) um eine parallel zur Achse (54) verlaufende Achse drehbar befestigt ist, am ersten Arm (56) eine Feder (62) fixierbar ist, der zweite Arm (58) mit einer Aussparung (64) ausgestattet ist, die sich aus einer kreisförmigen Öffnung (66) und einem Durchbruch (68) zusammensetzt, der sich von der Öffnung (66) bis zum Rand des Arms (58) erstreckt und dessen Querschnitt durch eine Nase (70) eingeschränkt wird, so dass der Durchbruch (68) in Querrichtung enger als die Öffnung (66) ist.

15. Halmguterntemaschine, insbesondere Ballenpresse (10) oder Ladewagen, mit einem Schneidwerk nach einem der Ansprüche 1 bis 13.

## Claims

1. Cutting mechanism for stalk-like agricultural crop, comprising:
a number of blades (40) which are arranged next to one another transversely with respect to a channel (36) through which the crop can flow and are coupled pivotably about a pivot axis (44) extending transversely with respect to the channel (36),
levers (52) which are assigned to the blades (44) are supported rotatably about a spindle (54) running parallel to the pivot axis (44) and are movable between an operating position, in which said levers hold the blade (40) assigned thereto in an active position in which said blade extends into the channel (36), and a non-operating position, in which said levers do not hold the blade (40) in the active position,
springs (62) which are assigned to the levers (52) and prestress the associated lever (52) into the operating position, and
a control shaft (72), which extends parallel to the pivot axis (44) and interacts with the levers (52), for selecting the length of cut and with which partial numbers of blades (40) to be brought into the active position can be selected,
**characterized in that** an actuator (74) which is independent of the control shaft (72) and is actuated by an external force is movable between a first position, in which all of the levers (52) are brought into the non-operating position, and a second position,
in which the levers (52) can pass into the operating position, and **in that** the control shaft (72) is designed to secure the levers (52) of the non-selected blades (40) in the non-operating position such that,
when the actuator (74) is in the second position, only the selected blades (40) pass into the active position by means of the action of the springs (62).

2. Cutting mechanism according to Claim 1, **characterized in that** the control shaft (72) is rotatable about the longitudinal axis thereof.

3. Cutting mechanism according to Claim 1 or 2, **characterized in that** there is a coupling (82) between the actuator (74) and the control shaft (72), said coupling permitting movement of the control shaft (72) only when the actuator (74) is in the first position.

4. Cutting mechanism according to Claim 3, **characterized in that** the coupling (82) is coupled to the actuator (74) and is equipped with a first part (84) and a second part (86), the first part (84) not restricting the movement of the control shaft (72) when an actuator (74) is in the first position, and the second part (86) preventing movement of the control shaft (72) when the actuator (74) is in the second position.

5. Cutting mechanism according to Claim 4, **characterized in that** the first part (84) of the coupling (82) is of a size which is larger than the enveloping circle diameter of the control shaft (72) while the second part (86) is an elongated hole in which a flattened region of the control shaft (72) is accommodated.

6. Cutting mechanism according to one of Claims 1 to 5, **characterized in that** the levers (52) comprise two arms (56, 58), a first arm (56) lying on a first side of the spindle (54) and a second arm (58) lying on the other side of the spindle (54), and the first arm (56) interacting with the blade (40) while the second arm (58) interacts with the actuator (74).

7. Cutting mechanism according to Claim 6, **characterized in that** the control shaft (72) interacts with the second arm (58).

8. Cutting mechanism according to one of Claims 1 to 7, **characterized in that** the control shaft (72) comprises flattened regions (80) which interact with recesses (64) in the lever (52), and **in that** the recesses (64) are shaped in such a manner that the recess (64) can be guided away from the control shaft (72) only in a predetermined position of the control shaft (72).

9. Cutting mechanism according to one of Claims 1 to 8, **characterized in that** the control shaft (72) has a total of four control positions.

10. Cutting mechanism according to Claim 9, **characterized in that** all of the blades (40) are in the active position in a first control position of the control shaft (72), **in that** in each case approximately half of the blades (40) are in an active position in an alternating manner in a second and third control position, and **in that** approximately one third of the blades (40) are in the active position in the fourth control position of the control shaft.

11. Cutting mechanism according to one of Claims 1 to 10, **characterized in that** the actuator (74) is drive-connected to a beam (78) which extends transversely with respect to the channel (36) and interacts with the levers (52).

12. Cutting mechanism according to Claim 11, **characterized in that** actuators (74) are arranged at both ends of the beam (78).

13. Cutting mechanism according to Claim 11 or 12, **characterized in that** the actuator (74) is connected to the beam (78) via a rocker (76) which can be pivoted about the spindle (54) of the lever (52)

14. Lever (52) which can be used in a cutting mechanism according to one of the preceding claims, wherein the lever (52) comprises a first arm (56) and a second arm (58) between which there is a spindle (54) about which the lever (52) can be mounted pivotably in the cutting mechanism, a roller (60) is fastened to the outer side of the first arm (56) so as to be rotatable about an axis running parallel to the spindle (54), a spring (62) can be fixed to the first arm (56), and the second arm (58) is provided with a recess (64) which is composed of a circular opening (66) and an aperture (68) which extends from the opening (66) as far as the edge of the arm (58) and the cross section of which is restricted by a lug (70) such that the aperture (68) is narrower in the transverse direction than the opening (66).

15. Stalk crop harvester, in particular baler (10) or self-loading forage box, with a cutting mechanism according to one of Claims 1 to 13.

## Revendications

1. Dispositif de coupe pour récoltes agricoles en forme de tiges, comprenant :
plusieurs couteaux (40), qui sont disposés les uns à côté des autres transversalement à un canal (36) pouvant être parcourus par les récoltes et qui sont articulés de façon pivotante autour d'un axe de pivotement (44) s'étendant transversalement au canal (36),
des leviers (52) associés aux couteaux (40), qui sont montés de façon rotative autour d'un axe (54) s'étendant parallèlement à l'axe de pivotement (44) et qui sont mobiles entre une position de fonctionnement, dans laquelle ils maintiennent le couteau (40) qui leur est associé dans une position active dans laquelle il s'étend dans le canal (36), et une position hors fonctionnement, dans laquelle ils ne maintiennent pas le couteau (40) dans la position active,
des ressorts (62) associés aux leviers (52), qui précontraignent le levier correspondant (52) dans la position de fonctionnement, et
un arbre de commutation (72) s'étendant parallèlement à l'axe de pivotement (44) et coopérant avec les leviers (52) pour la sélection de la longueur de coupe, avec lequel il est possible de sélectionner des nombres partiels des couteaux (40) à amener dans la position active,
**caractérisé en ce qu'**un actionneur (74) actionné par une force extérieure et indépendant de l'arbre de commutation (72) est mobile entre une première position, dans laquelle tous les leviers (52) sont amenés dans la position hors fonctionnement et une deuxième position dans laquelle les leviers (52) peuvent atteindre la position de fonctionnement,
et **en ce que** l'arbre de commutation (72) est conçu pour immobiliser les couteaux (40) respectivement non sélectionnés dans la position hors fonctionnement, de telle manière que seuls les couteaux (40) sélectionnés avec l'actionneur (74) se trouvant dans la deuxième position atteignent la position active sous l'action des ressorts (62).

2. Dispositif de coupe selon la revendication 1, **caractérisé en ce que** l'arbre de commutation (72) peut tourner autour de son axe longitudinal.

3. Dispositif de coupe selon la revendication 1 ou 2, **caractérisé en ce que** se trouve entre l'actionneur (74) et l'arbre de commutation (72) un couplage (82), qui ne permet le mouvement de l'arbre de commutation (72) que lorsque l'actionneur (74) se trouve dans la première position.

4. Dispositif de coupe selon la revendication 3, **caractérisé en ce que** le couplage (82) est couplé à l'actionneur (74) et est équipé d'une première partie (84) et d'une deuxième partie (86), dans lequel la première partie (84) ne limite pas le mouvement de l'arbre de commutation (72) lorsque l'actionneur (74) se trouve dans la première position et la deuxième partie (86) empêche le mouvement de l'arbre de commutation (72) lorsque l'actionneur (74) se trouve dans la deuxième position.

5. Dispositif de coupe selon la revendication 4, **caractérisé en ce que** la première partie (84) du couplage (82) présente une dimension qui est plus grande que le diamètre du cercle d'enveloppe de l'arbre de commutation (72), tandis que la deuxième partie (86) est un trou oblong, dans lequel est logée une zone aplatie de l'arbre de commutation (72).

6. Dispositif de coupe selon l'une quelconque des revendications 1 à 5, **caractérisé en ce que** les leviers (52) comprennent deux bras (56, 58), dans lequel un premier bras (56) est appliqué sur un premier côté de l'axe (54) et un deuxième bras (58) est appliqué sur l'autre côté de l'axe (54), et le premier bras (56) coopère avec le couteau (40) tandis que le deuxième bras (58) coopère avec l'actionneur (74).

7. Dispositif de coupe selon la revendication 6, **caractérisé en ce que** l'arbre de commutation (72) coopère avec le deuxième bras (58).

8. Dispositif de coupe selon l'une quelconque des revendications 1 à 7, **caractérisé en ce que** l'arbre de commutation (72) comporte des zones aplaties (80), qui coopèrent avec des évidements (64) dans le levier (52), et **en ce que** les évidements (64) sont façonnés de telle manière que l'évidement (64) ne puisse être dégagé de l'arbre de commutation (72) que dans une position prédéterminée de l'arbre de commutation (72).

9. Dispositif de coupe selon l'une quelconque des revendications 1 à 8, **caractérisé en ce que** l'arbre de commutation (72) présente au total quatre positions de commutation.

10. Dispositif de coupe selon la revendication 9, **caractérisé en ce que** tous les couteaux (40) se trouvent dans la position active dans une première position de commutation de l'arbre de commutation (72), **en ce qu'**environ la moitié des couteaux (40) se trouvent respectivement dans une position active, alternativement dans une deuxième et une troisième positions de commutation, et **en ce qu'**environ un tiers des couteaux (40) se trouvent dans la position active dans la quatrième position de commutation de l'arbre de commutation.

11. Dispositif de coupe selon l'une quelconque des revendications 1 à 10, **caractérisé en ce que** l'actionneur (74) se trouve en liaison d'entraînement avec une poutre (78) s'étendant transversalement au canal (36) et coopérant avec les leviers (52).

12. Dispositif de coupe selon la revendication 11, **caractérisé en ce que** des actionneurs (74) sont disposés aux deux extrémités de la poutre (78).

13. Dispositif de coupe selon la revendication 11 ou 12, **caractérisé en ce que** l'actionneur (74) est relié à la poutre (78) au moyen d'une bielle oscillante (76), qui peut pivoter autour de l'axe (54) des leviers (52).

14. Levier (52) utilisable dans un dispositif de coupe selon l'une quelconque des revendications précédentes, dans lequel le levier (52) comprend un premier bras (56) et un deuxième bras (58), entre lesquels se trouve un axe (54) autour duquel le levier (52) peut être monté de façon pivotante dans le dispositif de coupe, un galet (60) est fixé sur le côté extérieur du premier bras (56) de façon rotative autour d'un axe s'étendant parallèlement à l'axe (54), un ressort (62) peut être fixé au premier bras (56), le deuxième bras (58) est muni d'un évidement (64) qui se compose d'une ouverture circulaire (66) et d'un passage (68), qui s'étend de l'ouverture (66) jusqu'au bord du bras (58) et dont la section transversale est limitée par un bec (70), de telle manière que, en direction transversale, le passage (68) soit plus étroit que l'ouverture (66).

15. Machine de récolte de tiges, en particulier presse à balles (10) ou chargeur, avec un dispositif de coupe selon l'une quelconque des revendications 1 à 13.
